# EUROPEAN PATENT SPECIFICATION

(11) **EP 1 378 450 B1**
(45) Date of publication and mention of the grant of the patent: **15.03.2006**
(21) Application number: 02100776.0
(22) Date of filing: 02.07.2002
(51) Int. Cl.: B65B 31/02, B65B 31/04, B65B 43/54, B65D 65/40, B32B 27/08

(54) **Method and apparatus for vacuum bagging a good**
Verfahren und Vorrichtung zum Vakuumverpacken eines Guts in Beuteln
Procédé et dispositif d'ensachage sous vide d'un produit

(43) Date of publication of application: 07.01.2004
(73) Proprietor: Interprise - Brussels S.A., 1150 Brussels (BE)
(72) Inventor: Van Vinckenroy, Alain. Enterprise-Brussels S.A., 1150, Brussels (BE)
(74) Representative: Plucker, Guy

(56) References cited:
- EP-A- 0 380 812
- EP-A- 0 561 428
- DE-A- 3 506 116
- FR-A- 2 306 127
- FR-A- 2 565 936
- US-A- 2 454 477
- US-A- 4 254 169
- US-A- 4 706 441
- US-A- 4 845 927

## Description

### (Field of the invention)

The present invention relates to vacuum bagging and stocking of goods, in particular, but not exclusively to food products. Preservation of goods, especially of food, is a problem with a history as long as civilisation.

Goods have a tendency to degrade during stocking of said goods. Within the framework of the invention 'good' includes any product. Stocking of products includes, within the framework of the invention, any prolonged period of time between manufacturing or harvesting of a product and sale of a product, including shipping and transportation.

In particular, food products can become organoleptically unacceptable, or cause health hazards, or their quality can be impaired by a vast array of phenomena : proliferation of bacteria, oxidation, attack by insects and rodents, moulding and the related toxin production, discoloration reactions, enzymatic degradation, water absorption, ...

### (Background of the invention)

It is known to prevent, at least to some extent, degradation of goods by means of vacuum ensealing, i.e. by filling a bag with a good, sucking vacuum and sealing the bag. A bag is, within the framework of the invention, any flexible container.

Although the known methods, an example of which is known from US 4,706,441 do provide advantages, there remain problems. In particular the cost associated with providing protection by use of a vacuum bag versus the positive effects due to this provision remain a problem. The known methods and products provide a balance between said costs and benefits that is far from optimal. Either the costs of the bag or of the bagging and of providing vacuum are so high that for many application said costs are prohibitive or not enough protection is provided especially when the goods are stored for longer periods and/or the goods are relatively sensitive to degradation.

It is an object of the invention to provide a better cost-benefit balance.

To this end, in a first aspect of the invention, a method is provided comprising the following steps:
- A sample is analysed to investigate the initial condition of the good to be preserved, said analysis comprising
- Determination of natural respiration of the good,
- Determination of the maximum tolerated humidity of the good,
- Determination of an initial moisture content of the good
- Determination of the maximum allowed permeability for oxygen, for a chosen or desired duration of storage, for the vacuum bag
- Determination of a maximum permeability to water vapour, for the desired duration of storage, for the vacuum bag
- Fabrication or selection of a plastic material having the previously determined specifications concerning permeability to oxygen and water vapour for the vacuum bag, followed by production of a bag made of said plastic material, or selection of a bag made of plastic material having the previously determined specifications concerning permeability to oxygen and water vapour
- Bagging of the product with the specified moisture content in the produced or selected high barrier plastic bag and drawing of vacuum and sealing of the bag

This aspect of the invention is based on the recognition that the mentioned degradation phenomena strongly depend on the humidity, oxygen attack and storage period and that by combining a suitable humidity of the product and a reduction of oxygen by applying vacuum or oxygen replacement, it is possible to select conditions where these alterations are inhibited, resulting in the possibility to store certain foods over long periods of time yet avoid providing a too costly or insufficient protection by providing a material having water and oxygen permeability selected to the relevant properties of the good and the storage period.

To improve durability of the protection, high barrier bags are preferred, i.e. the plastic material for the vacuum bag has a permeability to oxygen and water vapour lower than or substantially equal to 1cc/m²/day and 1 gr/m²/day respectively in standard measuring conditions. The oxygen transmission rate may be measured by the D3985-95 standard test method for oxygen transmission through plastic films and sheeting which is hereby incorporated by reference or equivalent methods. The water vapour transmission rate may be measured by the F1249-01 Standard Test method for Water Vapor Transmission Rate through plastic Film and sheeting which is hereby incorporated by reference or equivalent test methods.

To improve the barrier performance at a competitive cost, it is preferred that the plastic material chosen or selected for the vacuum bag comprises a multilayer plastic material from which at least one plastic layer having a specific performance, i.e. a low value, regarding permeability to oxygen and at least one other plastic layer having a low permeability to water vapour.

By splitting the requirements for the water vapour and oxygen permeability over separate plastic layers a cost effective protection may be obtained. Furthermore the results of the analysis can be relatively easily implemented in fabrication or selection of the multilayer plastic material.

In a preferred embodiment a multilayer plastic material is made or selected having a central plastic layer with a low permeability to oxygen, sandwiched in between two adjacent layers having a low permeability to water vapour. The advantage of such a sandwich structure is that the low oxygen permeability plastic layer is itself protected form both sides from water vapour. Low oxygen permeability materials are often sensitive to degradation by water vapour. In addition at least the inner low water vapour layer is protected from oxygen attack. This improves the quality of protection provided. The structure itself is also relatively simple. Preferably the two low water vapour permeability plastic layers are made of the same material, and preferably are substantially identical. This reduces the complexity of manufacturing and thus reduces costs. The invention is, however, not restricted to this preferred embodiment.

In a further preferred embodiment the outermost layers of the multilayer plastic material material are made of a protective material that is able to be welded. Such outer most layers provided physical protection for the low oxygen permeability and low water vapour permeability layers.

By the method in accordance with the invention in its various embodiments one or more of the following advantages may be obtained at a reasonable cost:
- Stability of the product - Reduction of losses caused by the phenomena mentioned.
- The qualities of the product are preserved, or the shelf life is substantially increased.
- The moisture content is more stable. No or little weight loss by desiccation. Depending on the bag size, the variation of moisture content can be as low as ¼ of a percent per year.
- Insects are killed without pesticides nor fumigation : at the low residual air pressure due to vacuum which can be as low as 5 to 10% or lower in the method in accordance with the invention, all known insects suffocate. No need for treatment when the product is in bag, thereby reducing the traces of pesticides in the final products.
- Optimal hygiene, due to the high barrier of the used films for microorganisms, dust, rodents and insects.
- Limited pollution by smokes and odours, for the same reason.
- The good preservation is guaranteed during all transport/storage, the conditions of which are not always under control.
- No more danger of autocombustion.

The analysis can be done by a laboratory, preferably one specialised in food microbiology and food preservation

In a second aspect of the invention a system is provided for vacuum bagging of goods, comprising:
- A means for determination of natural respiration of a sample of the good to be bagged,
- A means for determination of the maximum tolerated humidity of the good,
- A means for determination of the maximum allowed permeability for oxygen, for a chosen or desired duration of storage, for the vacuum bag
- A means for determination of an initial moisture content, and of a maximum permeability to water vapour, for the desired duration of storage, for the vacuum bag
- A means for fabrication of a plastic material to the previously determined specifications concerning permeability to oxygen and water vapour for the vacuum bag, and a device for production of a bag made of a plastic material, or selection of a bag made of plastic material having the previously determined specifications concerning permeability to oxygen and water vapour
- A means for bagging of the product with the specified moisture content in the produced or selected high barrier plastic bag and drawing of vacuum and sealing of the bag.

It is remarked that the means for determination may be separate means (e.g. devices), or the two or more of the determination may be performed by a single device, the latter being preferred.

Preferably the material of the vacuum bag is a multilayer plastic material having at least one plastic layer having a specific performance, i.e. a low value, regarding permeability to oxygen and at least one other plastic layer to water vapour., more preferably having a central plastic layer with a low permeability to oxygen, sandwiched in between two adjacent layers having a low permeability to water vapour, most preferably the outermost layers of the material are made of a protective material that is able to be welded. These types of materials provide the above already discussed advantages.

The invention is also of particular advantage for stocking contaminated good (with contagious or toxic agents) which have to be stocked for some time before destroying such goods.

These and other aspects of the invention are apparent from and will be elucidated with reference to the embodiment(s) described hereinafter with reference to the accompanying drawings.

### (Brief description of the drawings)

In the drawings:
Fig. 1 illustrates by means of example the method in accordance with the invention.
Fig. 2 illustrates an embodiment of the method in accordance with the invention.
Fig. 3 schematically illustrates a system in accordance with the invention.
Fig. 4 illustrates a multilayer plastic material in accordance with the invention.
Fig. 5 and 6 illustrate an apparatus for manufacturing a multiplayer plastic material
Fig. 7 illustrates in a graphical form the relationship between storage time and parameters of the multiplayer plastic material

The figures are not drawn to scale. Generally, identical components are denoted by the same reference numerals in the Figures.

### (Detailed description of preferred embodiments)

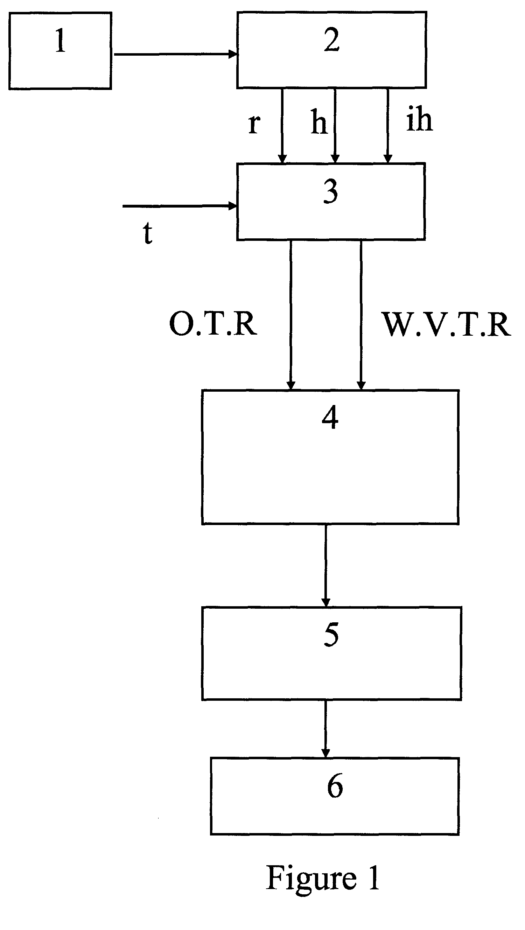

Figure 1 illustrates schematically the method in accordance with the invention. A sample of a good to be stored is taken (1) and it is analyzed (2). Said analysis provided the parameters natural respiration of the good (r), the initial humidity (ih) and the maximum tolerated humidity (h). Based on these parameters and the chosen or desired period (t) of storage the maximum oxygen permeability (here expressed as oxygen transmission rate (O.T.R)) and the maximum water vapour permeability (here expressed as water vapour transmission rate (W.V.T.R.)) are determined (3). These parameters are the input for the manufacturing or selection of the plastic material (4). The bag is produced or selected (5) and finally the bag is filled and vacuum is made (6).

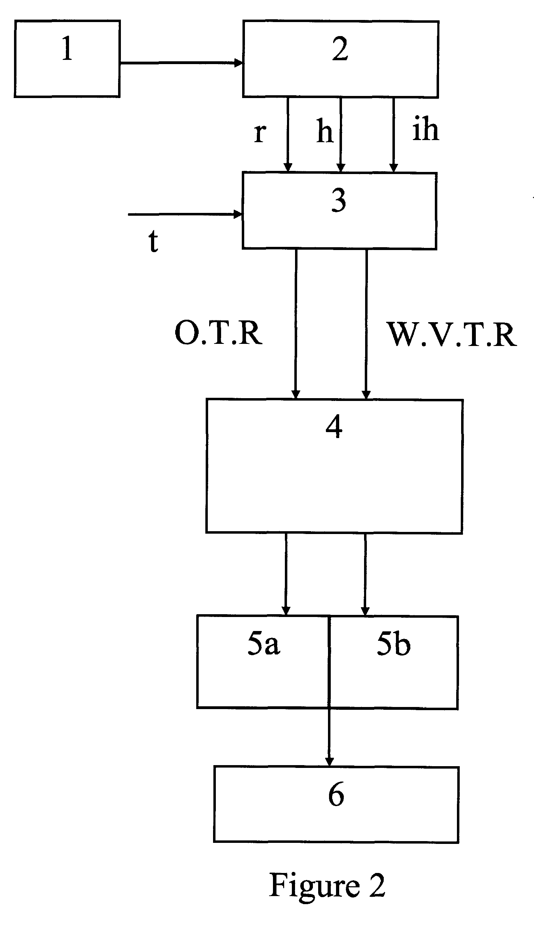

In figure 2 an embodiment of the method in accordance with the invention is illustrated. The parameter oxygen transmission rate (O.T.R.) is used for fabrication or selection of one, preferably central, layer of a multilayer plastic material (5a) while the parameter water vapour transmission rate (W.V.T.R.) is used for fabrication or selection of another layer of a multilayer plastic material, preferably two layers in between the central layer is sandwiched.

The method can be used for any good but is in particular advantageous for
- the preservation of foodstuffs such as
   Coffee, cocoa, rice, wheat, corn, oleaginous grains, beans, spices, powder milk, almonds, dry fruits, flours, sugars, malt, feed meals, fish meals, etc.
- for the preservation of sowing seeds (Tests have been carried out confirming good conservation of various seeds)
- for the preservation of chemical and pharmaceutical products in general
- for the preservation of products sensitive to oxygen, microorganisms, hygroscopic products, etc. and/or
- for the preservation of other products when high barrier and low oxygen are an advantage.

The method is also very advantageous for bagging and storing of contaminated materials, which have to be stored for a specified period of time before destruction. Such materials may for instance be contaminated with prions (e.g. mad cow disease, BSE), or other possibly infectious agents, or chemicals such as dioxine. An example of such a material is bone meal, which is a granular by-product of animal destruction, mainly comprised of desiccated bone remains. Normally such bone meal is reintroduced into the food chain, or in some other way recycled, but when a disease such as BSE occurs in a country or region, huge amounts of animals are often destructed. The bone meal by-product of this destruction cannot be re-introduced into the market and must be destroyed, e.g. incinerated. However, there is not always sufficient capacity available for immediately destroying the bone meal, the problem being compounded by the fact that, when such diseases occur, cross-border transport (or even transport within a region within a country) is forbidden and not advisable. The invention enables the bone meal to be bagged and stored safely and economically until sufficient destroying capacity is available. The bone meal (or other contaminated substance) remains well preserved and safely and economically stored. Although it would seem prima facie strange that it would be important that such contaminated materials (e.g. bone meal) remain preserved during storage time up until final destruction, since the ultimate goal is to destroy the bone meal or in general the contaminated material, it is to be understood that it is of paramount importance that during storage the materials are safely stored, because they pose a hazard. Storing the materials in a bulk (i.e. not bagged) condition may pose several risks: The materials may become air-borne, may spread, may be eaten by animals or may mould or in any other way the contamination may be spread. Moving the materials in bulk, leads to even more problems, posing also the risk of the material becoming air-borne or dropping of a truck, or some material remaining in a silo. Bagging the materials reduces to some extent such problems. However, even when bagged in e.g. paper or cotton bags, degradation of the materials may cause problems, water can penetrate and leave the bags, creating a risk that contamination is spread. Too high a water or oxygen content may even cause auto-combustion of the material, which is in particular for bone meal a real risk. Auto-combustion will lead to a spread of the contamination. Also degradation of the material in the bags may effect the integrity of the bag (e.g. by raising the pressure in the bag). Of prime importance for the degradation of such materials is the amount of water and oxygen within the stored materials during storage. In accordance with the invention the natural respiration of the good (r), the initial humidity (ih) and the maximum tolerated humidity (h) are determined. Based on these parameters and the chosen or desired period (t) of storage the maximum oxygen permeability (here expressed as oxygen transmission rate (O.T.R)) and the maximum water vapour permeability (here expressed as water vapour transmission rate (W.V.T.R.)) is set and a vacuum bag in accordance with these set parameters is used. This ensures that the contaminated goods are preserved during storage, thus allowing such contaminated materials to be bagged and stored safely, yet economically.

The analysis (2) can be done by a laboratory, preferably one specialised in food microbiology and food preservation

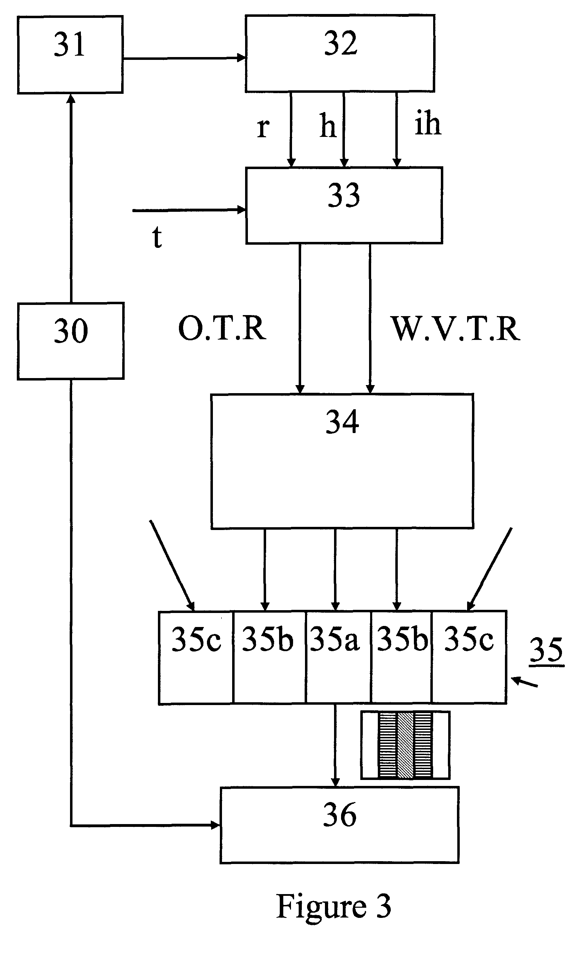

Fig. 3 illustrates schematically a system in accordance with the invention. From a good 30 to be stocked a sample is taken, either by a sample taking unit 31, optionally forming part of the system, or manually. The sample is analysed by analysing unit 32, which comprises a device for determination of natural respiration r of a sample of the good to be bagged, a device for determination of the maximum tolerated humidity h of the good and device for determination of an initial moisture content ih and means for providing data corresponding to the results of said determination. Alternatively separate analysing units may form part of the system for separately determining the mentioned parameters. Determination can take the form of physical determination, i.e. actually measuring the parameter, which is preferred especially for the initial moisture content and natural respiration, or determination by identifying a number of specified parameters of the good (such as what is comprised of, the origin of the good, the species, the grain size (distribution) etc.) to find a parameter such as the maximum tolerated humidity in which case the means for determination may comprise a calculation device with an input means (such as a key board) and an output means and program code to convert an input of a number of specified parameters of the good into a parameter such as the maximum tolerated humidity as an output of the program and the determination means.

The data r, h and ih are supplied to a determination unit 33 which unit also comprises a means for entering data on the period of storage t, and optionally, in systems which are usable for a multitude of products, on the good 30 to be stored. The determination unit, has means, for instance in the form of hard-ware and/or soft-ware (computer program), to determine on the basis of the date r, h, ih , t and, optionally, data on the good, a maximum allowed permeability for oxygen (O.T.R.) and a maximum permeability to water vapour (W.V.T.R) for the material vacuum bag. The material is made in material producing unit 35, which in this example is a co-extrusion unit in which a central layer 35a is co-extruded with layers 35b and layers 35c. The material, schematically indicated in figure 3 below unit 35 is fed to packaging and vacuum unit 36, directly if said packaging unit comprises a bag forming unit, or after having been made into bags, as is the good 30 to be stored. In unit 36 the good is fed into the bags, vacuum is drawn and the bags are sealed which are then stored, as schematically indicated in figure 3 by the arrow leaving unit 36.

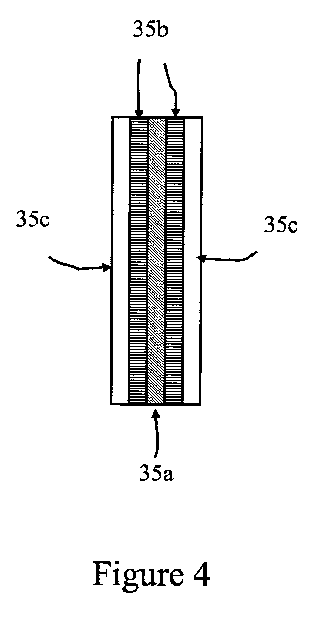

Figure 4 illustrates a multilayer plastic material useable for the invention. The multiplayer plastic material comprises a central layer 61 having a low value, regarding permeability to oxygen, preferably lower than or substantially equal to 1cc/m²/day. A layer of ethyl vinyl alcohol (E.V.O.H.) may be used for such a layer.
This central layer providing a high barrier to oxygen is sandwiched between layers 61 having a low value for permeability to water vapour preferably lower than or substantially equal to 1 gr/m²/day._Such a structure is relatively simple and the low oxygen permeability plastic layer 61 is itself protected from both sides from water vapour. Low oxygen permeability materials are often sensitive to degradation by water vapour. In addition at least the inner low water vapour layer 62 is protected from oxygen attack by layer 61. This improves the quality of protection provided. The layers 62 are preferably layers on basis of polyethylene adapted to provide a high water vapour barrier. This sandwich structure is itself sandwiched between outer layers 63 which can be welded. The external layers 63 can be made of and in preferred embodiments are made of polyethylene, which is a material that is easy to manipulate and easily welded. In this exemplary and preferred embodiment all layers constituting the multilayer plastic material are transparent. Transparency of the multiplayer plastic material allows for an easy and fast inspection of the stored goods.

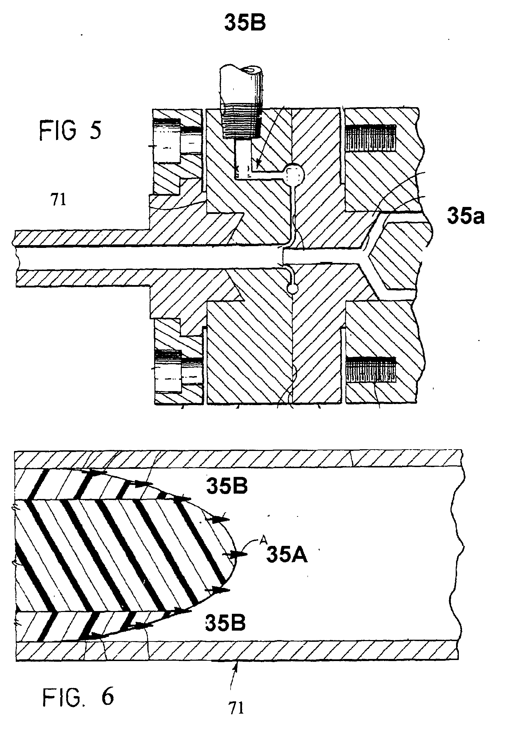

Figures 5 and 6 illustrate a device in which a multilayer plastic material is made. Material 35a is fed in to the central outlet and sandwiched between two layers 35B. The layers are then coextruded in outlet 71.

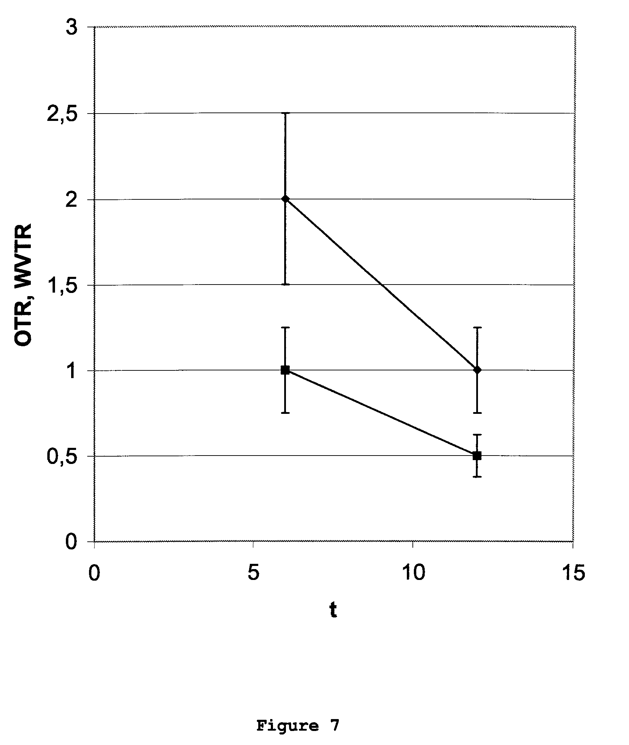

Figure 7 shows in the form of a graph for a sensitive good such as speciality coffee or cacao the maximum OTR (Upper curve) and WVTR values (lower curve).

In short the invention may be described as follows: A method of vacuum bagging a good starts with analysis a sample of a good to be bagged wherein natural respiration of the good, the maximum tolerated humidity of the good, an initial moisture content of the good is analysed. Said analysis is followed by determination of the maximum allowed permeability for oxygen and a maximum permeability to water vapour for the vacuum bag, for a desired duration of storage. Thereafter a plastic material is fabricated or selected with the previously determined specifications concerning permeability to oxygen and water vapour for the vacuum bag, followed by production of a bag made of said plastic material, or selection of a bag made of plastic material having to the previously determined specifications concerning permeability to oxygen and water vapour and bagging of the product with the specified moisture content in the produced high plastic and drawing of vacuum and sealing of the bag.

It will be appreciated by persons skilled in the art that the present invention is not limited by what has been particularly shown and described hereinabove. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

The present invention has been described in terms of specific embodiments, which are illustrative of the invention and not to be construed as limiting.

## Claims

1. Method of vacuum bagging a good comprising the following steps:
- A sample is analysed to investigate the initial condition of the good to be preserved, said analysis comprising
- Determination of natural respiration of the good,
- Determination of the maximum tolerated humidity of the good,
- Determination of an initial moisture content of the good
- Determination of the maximum allowed permeability for oxygen, for a chosen or desired duration of storage, for the vacuum bag
- Determination of a maximum permeability to water vapour, for the desired duration of storage, for the vacuum bag
- Fabrication or selection of a plastic material having the previously determined specifications concerning permeability to oxygen and water vapour for the vacuum bag, followed by production of a bag made of said plastic material, or selection of a bag made of plastic material having the previously determined specifications concerning permeability to oxygen and water vapour
- Bagging of the product with the specified moisture content in the produced or selected high barrier plastic bag and drawing of vacuum and sealing of the bag.

2. Method as claimed in claim 1, **characterised in that** the plastic material for the vacuum bag has a permeability to oxygen and water vapour lower than or substantially equal to 1cc/m²/day and 1 gr/m²/day respectively.

3. Methods as claimed in claims 1 or 2, **characterised in that** the plastic material chosen or selected for the vacuum bag comprises a multilayer plastic material from which at least one plastic layer having a specific performance, i.e. a low value, regarding permeability to oxygen and at least one other plastic layer having a low permeability to water vapour.

4. Method as claimed in claim 3, **characterised in that** the multilayer plastic material is made or selected having a central plastic layer with a low permeability to oxygen, sandwiched in between two adjacent layers having a low permeability to water vapour.

5. Method as claimed in claim 3 or 4, **characterised in that** the outermost layers of the multilayer plastic material are made of a protective material that is able to be welded

6. Method as claimed in any of the preceding claims **characterised in that** analysis is performed in situ.

7. Method as claimed in claim 6, **characterised in that** an analysis kit is used for analysis to investigate the initial condition of the good, said kit comprising means for input of the desired storage period and means for output of data for the material of the bag or of the bag suitable for fabrication or selection of the material or of the bag.

8. System for vacuum bagging a good comprising:
- A means for determination of natural respiration of a sample of the good to be bagged,
- A means for determination of the maximum tolerated humidity of the good,
- A means for determination of an initial moisture content,
- A means for determination of the maximum allowed permeability for oxygen, for a chosen or desired duration of storage, for the vacuum bag and of a maximum permeability to water vapour, for the desired duration of storage, for the vacuum bag
- A means for fabrication of a plastic material to the previously determined specifications concerning permeability to oxygen and water vapour for the vacuum bag, and a device for production of a bag made of a plastic material, or selection of a bag made of plastic material having the previously determined specifications concerning permeability to oxygen and water vapour
- A means for bagging of the product with the specified moisture content in the produced or selected high barrier plastic bag and drawing of vacuum and sealing of the bag.

9. System as claimed in claim 8, **characterised in that** a single device comprises means for two or more of the said determinations.

## Patentansprüche

1. Verfahren zum Vakuumverpacken eines Guts, umfassend die folgenden Schritte :
- Analysieren einer Probe, um den anfänglichen Zustand des aufzubewahrenden Guts zu untersuchen, wobei die Analyse Folgendes umfasst :
- Bestimmen der natürlichen Atmung des Guts,
- Bestimmen der höchsten zulässigen Feuchtigkeit des Guts,
- Bestimmen eines anfänglichen Feuchtigkeitsgehaltes des Guts,
- Bestimmen der höchsten erlaubten Durchlässigkeit gegenüber Sauerstoff für eine gewählte oder gewünschte Dauer der Lagerung für den Vakuumbeutel,
- Bestimmen der höchsten Durchlässigkeit gegenüber Wasserdampf für die gewünschte Dauer der Lagerung für den Vakuumbeutel,
- Herstellen oder Auswählen eines Kunststoffmaterials, das die vorher bestimmten Spezifikationen hinsichtlich der Durchlässigkeit gegenüber Sauerstoff und Wasserdampf für den Vakuumbeutel aufweist, gefolgt vom Herstellen eines Beutels, der aus dem Kunststoffmaterial hergestellt ist, oder Auswählen eines Beutels, der aus einem Kunststoffmaterial hergestellt ist, das die vorher bestimmten Spezifikationen hinsichtlich der Durchlässigkeit gegenüber Sauerstoff und Wasserdampf aufweist,
- Verpacken des Produkts mit dem bestimmten Feuchtigkeitsgehalt im hergestellten oder ausgewählten hochsperrenden Kunststoffbeutel und Saugen eines Vakuums und Versiegeln des Beutels.

2. Verfahren nach Anspruch 1, **dadurch gekennzeichnet, dass** das Kunststoffmaterial für den Vakuumbeutel eine Durchlässigkeit gegenüber Sauerstoff und Wasserdampf aufweist, die geringer als oder im Wesentlichen gleich wie 1 cm³/m²/Tag bzw. 1 g/m²/Tag ist.

3. Verfahren nach Anspruch 1 oder 2, **dadurch gekennzeichnet, dass** das gewählte oder ausgewählte Kunststoffmaterial für den Vakuumbeutel ein Mehrschichten-Kunststoffmaterial umfasst, wovon zumindest eine Kunststoffschicht eine bestimmte Leistung, d.h., einen geringen Wert, hinsichtlich der Durchlässigkeit gegenüber Sauerstoff aufweist, und zumindest eine andere Kunststoffschicht eine geringe Durchlässigkeit gegenüber Wasserdampf aufweist.

4. Verfahren nach Anspruch 3, **dadurch gekennzeichnet, dass** das Mehrschichten-Kunststoffmaterial so hergestellt oder ausgewählt wird, dass es eine mittlere Kunststoffschicht mit einer geringen Durchlässigkeit gegenüber Sauerstoff aufweist, die zwischen zwei benachbarte Schichten eingefügt ist, welche eine geringe Durchlässigkeit gegenüber Wasserdampf aufweisen.

5. Verfahren nach Anspruch 3 oder 4, **dadurch gekennzeichnet, dass** die äußersten Schichten des Mehrschichten-Kunststoffmaterials aus einem schützenden Material hergestellt sind, das geschweißt werden kann.

6. Verfahren nach einem der vorhergehenden Ansprüche, **dadurch gekennzeichnet, dass** die Analyse *in-situ* durchgeführt wird.

7. Verfahren nach Anspruch 6, **dadurch gekennzeichnet, dass** für die Analyse zum Untersuchen des anfänglichen Zustands des Guts ein Analysesatz verwendet wird, wobei dieser Satz ein Mittel zur Eingabe des gewünschten Lagerzeitraums und ein Mittel zur Ausgabe von Daten für das Material des Beutels oder den Beutel, die sich für die Herstellung oder Auswahl des Materials oder des Beutels eignen, umfasst.

8. System zum Vakuumverpacken eines Guts, umfassend
- ein Mittel zur Bestimmung der natürlichen Atmung einer Probe des zu verpackenden Guts,
- ein Mittel zur Bestimmung der höchsten zulässigen Feuchtigkeit des Guts,
- ein Mittel zur Bestimmung eines anfänglichen Feuchtigkeitsgehalts,
- ein Mittel zur Bestimmung der höchsten erlaubten Durchlässigkeit gegenüber Sauerstoff, für eine gewählte oder gewünschte Dauer der Lagerung, für den Vakuumbeutel und einer höchsten Durchlässigkeit gegenüber Wasserdampf, für die gewünschte Dauer der Lagerung, für den Vakuumbeutel,
- ein Mittel zur Herstellung eines Kunststoffmaterials nach den vorher bestimmten Spezifikationen hinsichtlich der Durchlässigkeit gegenüber Sauerstoff und Wasserdampf für den Vakuumbeutel, und eine Vorrichtung zur Herstellung eines Beutels, der aus einem Kunststoffmaterial hergestellt ist, oder zur Auswahl eines Beutels, der aus einem Kunststoffmaterial hergestellt ist, das die vorher bestimmten Spezifikationen hinsichtlich der Durchlässigkeit gegenüber Sauerstoff und Wasserdampf aufweist,
- ein Mittel zum Verpacken des Produkts mit dem bestimmten Feuchtigkeitsgehalt im hergestellten oder ausgewählten hochsperrenden Kunststoffbeutel und zum Saugen eines Vakuums und Versiegeln des Beutels.

9. System nach Anspruch 8, **dadurch gekennzeichnet, dass** eine einzelne Vorrichtung Mittel für zwei oder mehr dieser Bestimmungen umfasst.

## Revendications

1. Procédé d'ensachage sous vide d'un produit, comprenant les étapes suivantes :
- l'analyse d'un échantillon afin d'étudier l'état initial du produit à conserver, ladite analyse comprenant :
- la détermination de la respiration naturelle du produit,
- la détermination de l'humidité maximale tolérée du produit,
- la détermination d'une teneur en humidité initiale du produit,
- la détermination de la perméabilité maximale admise pour l'oxygène, pour une durée de stockage choisie ou souhaitée, pour le sac sous vide,
- la détermination d'une perméabilité maximale admise à la vapeur d'eau, pour la durée de stockage souhaitée, pour le sac sous vide,
- la fabrication ou la sélection d'un matériau en matière synthétique ayant les spécifications déterminées précédemment concernant la perméabilité à l'oxygène et à la vapeur d'eau pour le sac sous vide, suivie de la production d'un sac constitué dudit matériau en matière synthétique ou la sélection d'un sac constitué d'un matériau en matière synthétique ayant les spécifications déterminées précédemment concernant la perméabilité à l'oxygène et à la vapeur d'eau,
- l'ensachage du produit avec la teneur en humidité spécifiée dans le sac en matière synthétique à barrière élevée produit ou sélectionné, l'application d'un vide et le scellage du sac.

2. Procédé selon la revendication 1, **caractérisé en ce que** le matériau en matière synthétique a une perméabilité à l'oxygène et à la vapeur d'eau inférieure ou sensiblement égale à 1 cm³/m²/jour et à 1 g/m²/jour, respectivement.

3. Procédé selon la revendication 1 ou 2, **caractérisé en ce que** le matériau en matière synthétique choisi ou sélectionné pour le sac sous vide comprend un matériau en matière synthétique multicouches, dont au moins une couche en matière synthétique ayant une performance spécifique, c'est-à-dire une valeur basse en ce qui concerne la perméabilité à l'oxygène, et au moins une autre couche en matière synthétique ayant une faible perméabilité à la vapeur d'eau.

4. Procédé selon la revendication 3, **caractérisé en ce que** le matériau en matière synthétique multicouches est fabriqué ou sélectionné de manière à avoir une couche centrale en matière synthétique de faible perméabilité à l'oxygène, prise en sandwich entre deux couches adjacentes ayant une faible perméabilité à la vapeur d'eau.

5. Procédé selon la revendication 3 ou 4, **caractérisé en ce que** les couches extérieures du matériau en matière synthétique multicouches sont formées d'un matériau protecteur qui peut être soudé.

6. Procédé selon l'une quelconque des revendications précédentes, **caractérisé en ce que** l'analyse est effectuée in situ.

7. Procédé selon la revendication 6, **caractérisé en ce que** l'on utilise une trousse d'analyse pour étudier l'état initial du produit, ladite trousse comprenant des moyens pour la saisie de la période de stockage souhaitée et des moyens pour la délivrance de données pour le matériau du sac ou pour le sac convenant à la fabrication ou à la sélection du matériau ou du sac.

8. Système d'ensachage sous vide d'un produit, comprenant :
- un moyen pour déterminer la respiration naturelle d'un échantillon du produit à ensacher,
- un moyen pour déterminer l'humidité maximale tolérée du produit,
- un moyen pour déterminer une teneur en humidité initiale,
- un moyen pour déterminer la perméabilité à l'oxygène maximale admise, pour une durée de stockage choisie ou souhaitée pour le sac sous vide, et une perméabilité maximale à la vapeur d'eau, pour la durée de stockage souhaitée, pour le sac sous vide,
- un moyen de fabrication d'un matériau en matière synthétique selon les spécifications déterminées précédemment concernant la perméabilité à l'oxygène et à la vapeur d'eau pour le sac sous vide et un dispositif de production d'un sac constitué d'un matériau en matière synthétique ou de sélection d'un sac constitué d'un matériau en matière synthétique ayant les spécifications déterminées précédemment concernant la perméabilité à l'oxygène et à la vapeur d'eau,
- un moyen pour ensacher le produit avec la teneur en humidité spécifiée dans le sac en matière synthétique à barrière élevée produit ou sélectionné, pour appliquer un vide et sceller le sac.

9. Système selon la revendication 8, **caractérisé en ce qu'**un seul dispositif comprend des moyens pour deux desdites déterminations ou plus.
